# EUROPEAN PATENT APPLICATION

(11) **EP 3 950 562 A1**
(43) Date of publication of application: **09.02.2022**
(21) Application number: 21187690.9
(22) Date of filing: 26.07.2021
(51) Int. Cl.: B66C 21/00

(54) **TRANSPORTATION SYSTEM, CONTROL METHOD, AND PROGRAM**

(30) Priority: 28.07.2020 JP 2020127433
(71) Applicant: Toyota Jidosha Kabushiki Kaisha, Toyota-shi, Aichi-ken, 471-8571 (JP)
(72) Inventor: IWAMOTO, Kunihiro, Aichi-ken, 471-8571 (JP)
(74) Representative: D Young & Co LLP

(57) **Abstract**

A transportation system capable of preventing or minimizing limitation of a transportable range in a three-dimensional space is provided. A transportation system (1) for transporting a transportation object in a three-dimensional space includes a container (21) configured to be suspended by a vertical wire (24), a container support unit (22) configured to support the container (21) with the vertical wire (24) interposed therebetween, at least three support columns (20), a vertical actuator (26) configured to wind and unwind the vertical wire (24), a horizontal actuator (25) configured to wind and unwind a horizontal wire (23) stretched between the support column (20) and the container support unit (22), and a control apparatus (100) configured to control the vertical actuator (26) to thereby control a vertical movement of the container (21), and control the horizontal actuator (25) to thereby control a horizontal movement of the container (21).

## Description

### BACKGROUND

The present disclosure relates to a transportation system, a control method, and a program, and more particularly to transportation in a three-dimensional space.

A system for transporting loads in a three-dimensional space is known. For example, Japanese Unexamined Patent Application Publication No. H10-331432 discloses a system in which a loading hook supported by four wires from four directions is moved to a position in vertical and horizontal directions by a winding or unwinding operation of the wires to transport materials.

### SUMMARY

According to the technique disclosed in Japanese Unexamined Patent Application Publication No. H10-331432, since the wires from four directions are connected to the loading hook, when the loading hook moves downward, the positions of the wires are also lowered. Thus, in a transportation environment in which an obstacle is present within a moving range of the loading hook, there is a risk that one of the wires may collide with the obstacle during transportation. For this reason, with the technique disclosed in Japanese Unexamined Patent Application Publication No. 10-331432, a transportable range is limited.

The present disclosure has been made in view of the above-described circumstances, and an object thereof is to provide a transportation system, a control method, and a program capable of preventing or minimizing limitation of a transportable range in a three-dimensional space.

An example aspect of the present disclosure in order to achieve the above object is a transportation system for transporting a transportation object in a three-dimensional space. The transportation system includes: a holding unit configured to be suspended by a vertical wire and hold the transportation object, the vertical wire being a wire stretched in a vertical direction; a support unit configured to support the holding unit with the vertical wire interposed therebetween; at least three support columns; a vertical actuator configured to wind and unwind the vertical wire; a horizontal actuator configured to wind and unwind a horizontal wire stretched between the support column and the support unit, the horizontal wire being a wire stretched in a horizontal direction; and a control apparatus configured to control the vertical actuator to thereby control a vertical movement of the holding unit, and control the horizontal actuator to thereby control a horizontal movement of the support unit and the holding unit.

According to such a transportation system, the position of the holding unit in the horizontal direction is adjusted by the lengths of the horizontal wires, and the position of the holding unit in the vertical direction is adjusted by the length of the vertical wire. Thus, the holding unit can be vertically moved downward without lowering the horizontal wires crossing the three-dimensional space. This prevents the wires crossing the three-dimensional space from colliding with an obstacle in the three-dimensional space. That is, it is possible to prevent or minimize the limitation of the transportable range in the three-dimensional space.

In the above example aspect, a plurality of a set of the holding unit, the support unit, the vertical actuator, and the horizontal actuator may be included, and the horizontal wires of different heights may be stretched between the plurality of the support units and the support columns, and the support units are arranged in a multi-layer manner.

In this manner, a multi-layer transportation system is constituted. Thus, the transport capacity can be improved as compared with a single-layer transportation system.

In the above example aspect, the control apparatus may be configured to control, when the control apparatus controls the holding unit to be moved in the horizontal direction, the vertical actuator for winding the vertical wire for the holding unit to be moved so that the holding unit to be moved is positioned above the horizontal wire connected to the support unit in a layer one below a layer to which the holding unit to be moved belongs.

By performing such control, the holding unit moving in the horizontal direction is moved at a position higher than the structure in the lower layer. It is thus possible to prevent the occurrence of a collision at the time of moving in the horizontal direction.

In the above example aspect, the control apparatus may be configured to control, when the control apparatus controls the holding unit to be lowered, a horizontal position of the support unit in a layer lower than the layer to which the holding unit to be lowered belongs, the support unit being hereinafter referred to as a lower support unit, so that the position of the lower support unit and the position of the horizontal wire connected to the lower support unit are not positioned on a line of flow of the holding unit to be lowered in the vertical direction.

By performing such control, the structure in the lower layer is disposed at a position that does not hinder the vertical movement of the holding unit in the upper layer. It is thus possible to prevent the occurrence of a collision at the time of the vertical movement.

In the above example aspect, the control apparatus may be configured to control the horizontal movements of the support units in the respective layers so that movement areas of the support units in the respective layers in the horizontal direction are different from each other.

By doing so, it is possible to prevent or minimize the support units in the respective layers and the horizontal wires connected to these support units from being close to each other. It is thus possible to reduce the possibility that the arrangement of the structure in the lower layer of the transportation system hinders the lowering of the holding unit in the upper layer.

In the above example aspect, a repository of the transportation object may be provided in a central part of an area surrounded by the support columns, and the control apparatus may be configured to perform control to transport the transportation object of the repository.

By doing so, it is possible to reduce variations in a transportation distance between each point in the area and the repository.

In the above example aspect, a repository of the transportation object may be provided in any part around an area surrounded by the support columns, and the control apparatus may be configured to perform control to transport the transportation object of the repository.

In this manner, the transportation object can be collected at the repository without entering the area surrounded by the support columns.

Another example aspect of the present disclosure to achieve the object is a method for controlling a transportation system for transporting a transportation object in a three-dimensional space, the transportation system comprising: a holding unit configured to be suspended by a vertical wire and hold the transportation object, the vertical wire being a wire stretched in a vertical direction; a support unit configured to support the holding unit with the vertical wire interposed therebetween; at least three support columns; a vertical actuator configured to wind and unwind the vertical wire; and a horizontal actuator configured to wind and unwind a horizontal wire stretched between the support column and the support unit, the horizontal wire being a wire stretched in a horizontal direction. The method includes: controlling the vertical actuator to thereby control a vertical movement of the holding unit; and controlling the horizontal actuator to thereby control a horizontal movement of the support unit and the holding unit.

According to such a control method, the position of the holding unit in the horizontal direction is adjusted by the lengths of the horizontal wires, and the position of the holding unit in the vertical direction is adjusted by the length of the vertical wire. Thus, the holding unit can be vertically moved downward without lowering the horizontal wires crossing the three-dimensional space. This prevents the wires crossing the three-dimensional space from colliding with an obstacle in the three-dimensional space. That is, it is possible to prevent or minimize the limitation of the transportable range in the three-dimensional space.

Another example aspect of the present disclosure to achieve the object is a program for causing a computer of a transportation system for transporting a transportation object in a three-dimensional space including: a holding unit configured to be suspended by a vertical wire and hold the transportation object, the vertical wire being a wire stretched in a vertical direction; a support unit configured to support the holding unit with the vertical wire interposed therebetween; at least three support columns; a vertical actuator configured to wind and unwind the vertical wire; and a horizontal actuator configured to wind and unwind a horizontal wire stretched between the support column and the support unit, the horizontal wire being a wire stretched in a horizontal direction, to execute: controlling the vertical actuator to thereby control a vertical movement of the holding unit; and controlling the horizontal actuator to thereby control a horizontal movement of the support unit and the holding unit.

According to such a program, the position of the holding unit in the horizontal direction is adjusted by the lengths of the horizontal wires, and the position of the holding unit in the vertical direction is adjusted by the length of the vertical wire. Thus, the holding unit can be vertically moved downward without lowering the horizontal wires crossing the three-dimensional space. This prevents the wires crossing the three-dimensional space from colliding with an obstacle in the three-dimensional space. That is, it is possible to prevent or minimize the limitation of the transportable range in the three-dimensional space.

According to the present disclosure, it is possible to provide a transportation system, a control method, and a program capable of preventing or minimizing limitation of a transportable range in a three-dimensional space.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a perspective view showing a schematic configuration of a transportation system according to a first embodiment;
Fig. 2 is a block diagram showing a schematic configuration of the transportation system according to the first embodiment;
Fig. 3 is a flowchart showing an example of a flow of a transport operation of the transportation system according to the first embodiment;
Fig. 4 is a schematic side view showing a schematic configuration of a transportation system according to a second embodiment;
Fig. 5 is a block diagram showing a schematic configuration of the transportation system according to the second embodiment;
Fig. 6 is a plan view of the transportation system according to the second embodiment; and
Fig. 7 is a flowchart showing an example of a flow of a transport operation of the transportation system according to the second embodiment.

### DESCRIPTION OF EMBODIMENTS

Embodiments of the present disclosure will be described below with reference to the drawings.

### [First embodiment]

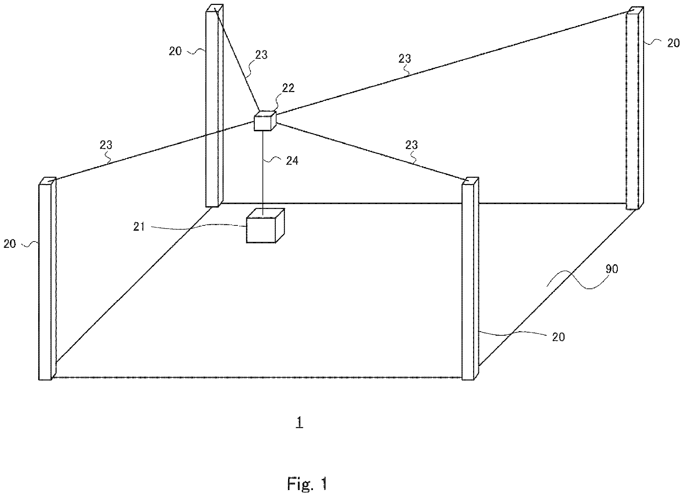

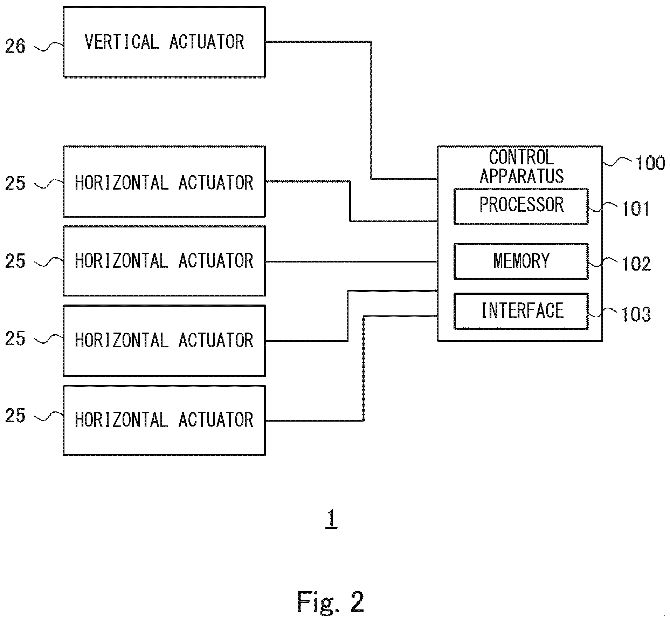

Fig. 1 is a perspective view showing a schematic configuration of a transportation system 1 according to this embodiment. Fig. 2 is a block diagram showing a schematic configuration of the transportation system 1 according to this embodiment.

As shown in Figs. 1 and 2, the transportation system 1 transports a transportation object in a three-dimensional space, and includes support columns 20, a container 21, a container support unit 22, horizontal wires 23, a vertical wire 24, horizontal actuators 25, a vertical actuator 26, and a control apparatus 100.

The support columns 20 are arranged around a predetermined planar area 90. In the example shown in Fig. 1, the transportation system 1 includes four support columns 20. That is, the four support columns 20 are arranged to form a polygon having the positions of the respective support columns 20 as apexes (in Fig. 1, the polygon is a rectangle), so that a predetermined planar area 90 is formed. For example, a town is formed in the planar area 90. That is, a large number of buildings, roads, and the like are present in the planar area 90. In the example shown here, the number of the support columns 20 is four, but the number of the support columns 20 may be any number of three or more. The support column 20 is a structure for supporting the horizontal wire 23 at a predetermined height. That is, each horizontal wire 23 is supported at the same height by the support column 20. In the example shown in Fig. 1, the horizontal wire 23 is supported at the leading end of the support column 20 of the same height.

The horizontal wire 23 is a wire stretched in the horizontal direction between the support column 20 and the container support unit 22, and connects the support column 20 to the container support unit 22. In the transportation system 1, the horizontal wire 23 is provided for each of the support columns 20. In the example shown in Fig. 1, there are four horizontal wires 23, each connected between one of the support columns 20 and the container support unit 22.

The container support unit 22 is a device for supporting the container 21 with the vertical wire 24 interposed therebetween. The container support unit 22 is also simply referred to as a support unit.

The vertical wire 24 is a wire stretched in the vertical direction and connects the container support unit 22 to the container 21. Thus, the container 21 is suspended from the container support unit 22 with the vertical wire 24 interposed therebetween.

The container 21 stores a transportation object(s). Here, the transportation object may be a product or a person. The container 21 is suspended by the vertical wire 24. In place of the container 21, any holding unit such as a hook or a robot hand may be used to hold the transportation object. That is, the container 21 is an example of the holding unit.

The horizontal actuator 25 is an actuator for winding and unwinding the horizontal wire 23, and is, for example, a winch. The horizontal actuator 25 is provided to each horizontal wire 23. For example, although the horizontal actuator 25 is provided to the support column 20 to which the horizontal wire 23 to be operated is connected as an example, the horizontal actuator 25 may be provided to the container support unit 22. When the horizontal actuator 25 adjusts the length of each horizontal wire 23, the container support unit 22 can be moved to any position in the horizontal direction in the space surrounded by the support columns 20.

The vertical actuator 26 is an actuator for winding and unwinding the vertical wire 24, and is, for example, a winch. For example, the vertical actuator 26 is provided in the container support unit 22, and instead may be provided to the container 21. When the vertical actuator 26 adjusts the length of the vertical wire 24, the container 21 can be moved to any position in the vertical direction in the space surrounded by the support columns 20.

The control apparatus 100 controls the transportation system 1, and includes a processor 101, a memory 102, and an interface 103. The processor 101, the memory 102, and the interface 103 are connected to each other through a data bus or the like. The control apparatus 100 is communicatively connected to the horizontal actuators 25 and the vertical actuator 26 and controls the operations of the actuators by transmitting control signals to these actuators.

The interface 103 is an input/output circuit used to input/output signals to/from the horizontal actuators 25, the vertical actuator 26, and any other device.

The memory 102 is composed of, for example, a combination of a volatile memory and a non-volatile memory. The memory 102 is used to store software (a computer program) and the like executed by the processor 101, including one or more instructions.

The processor 101 reads the software (the computer program) from the memory 102 and executes it, thereby executing the processing of the control apparatus 100 described later.

The processor 101 may be, for example, a microprocessor, an MPU (Micro Processor Unit), or a CPU (Central Processing Unit). The processor 101 may include a plurality of processors.

As described above, the control apparatus 100 functions as a computer.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

The control apparatus 100 controls the winding and unwinding of the vertical wire 24 performed by the vertical actuator 26 to thereby control the vertical movement of the container 21. For example, the control apparatus 100 controls the vertical actuator 26 so that the container support unit 22 moves in the vertical direction when the container support unit 22 is positioned right above a transport start point or a transport destination point.

Further, the control apparatus 100 controls the winding and unwinding of the horizontal wires 23 performed by the horizontal actuator 25 to thereby control the horizontal movement of the container support unit 22 and the container 21. By controlling each of the horizontal actuators 25, the control apparatus 100 adjusts the length of each horizontal wire 23 so that the height of the container support unit 22 maintains a predetermined height. Specifically, in this embodiment, the control apparatus 100 adjusts the length of each horizontal wire 23 so that the height of the container support unit 22 is maintained at the height of the support position of the horizontal wire 23 supported by the support column 20. More specifically, when the height of the support position of the horizontal wire 23 supported by the support column 20 is defined as H, the control apparatus 100 adjusts the length of each horizontal wire 23 so that the height of the container support unit 22 falls within a range of H-d or more and H or less. Here, d is a predetermined value for specifying a range which allows the suspension of the container support unit 22. Note that also when the container support unit 22 is moved in the horizontal direction, the control apparatus 100 controls each of the horizontal actuators 25 so that the container support unit 22 is moved while maintaining its height. For example, the control apparatus 100 controls each horizontal actuator 25 so that the container support unit 22 is moved in the horizontal direction from right above the designated transport start point to right above the designated transport destination point.

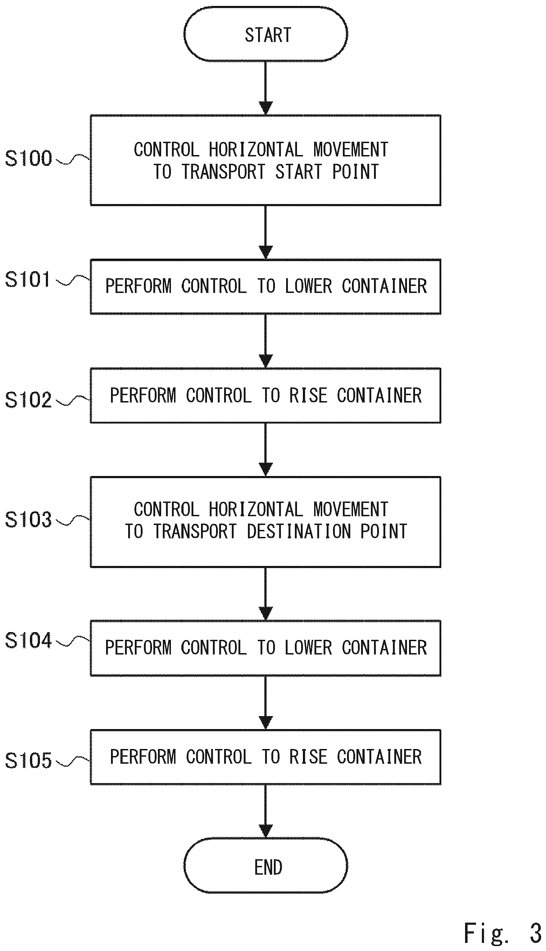

Fig. 3 is a flowchart showing an example of a flow of a transport operation of the transportation system 1. The flow of the transportation operation will be described below with reference to Fig. 3.

In Step S100, the control apparatus 100 controls the horizontal movements of the container support unit 22 and the container 21. Specifically, the control apparatus 100 controls each horizontal actuator 25 so that the container support unit 22 and the container 21 are moved right above the designated transport start point.

Next, in Step S101, the control apparatus 100 controls the vertical actuator 26 so that the container 21 is lowered to the transport start point. After that, the transportation object is stored in the container 21.

Next, in Step S102, the control apparatus 100 controls the vertical actuator 26 so that the height of the container 21 rises to a predetermined height.

Next, in Step S103, the control apparatus 100 controls each horizontal actuator 25 so that the container support unit 22 and the container 21 are moved right above the designated transport destination point.

Next, in Step S104, the control apparatus 100 controls the vertical actuator 26 so that the container 21 is lowered to the transport destination point. In this way, the transportation object reaches the transport destination point.

Lastly, in Step S105, the control apparatus 100 controls the vertical actuator 26 so that the height of the container 21 rises to a predetermined height.

The first embodiment has been described above. According to this embodiment, the wires (i.e., the horizontal wires 23) for moving in the horizontal direction and the wire (i.e., the vertical wire 24) for moving in the vertical direction are provided, and the position of the container 21 in the horizontal direction is adjusted by the lengths of the horizontal wires 23, and the position of the container 21 in the vertical direction is adjusted by the length of the vertical wire 24. Thus, the container 21 can be vertically moved downward without lowering the horizontal wires 23 crossing the three-dimensional space. This prevents the wires crossing the three-dimensional space from colliding with an obstacle in the three-dimensional space. That is, according to this embodiment, it is possible to prevent or minimize the limitation of the transportable range in the three-dimensional space.

### [Second embodiment]

Next, a second embodiment will be described. This embodiment is different from the first embodiment in that the transportation system according to the second embodiment is a multi-layer transportation system.

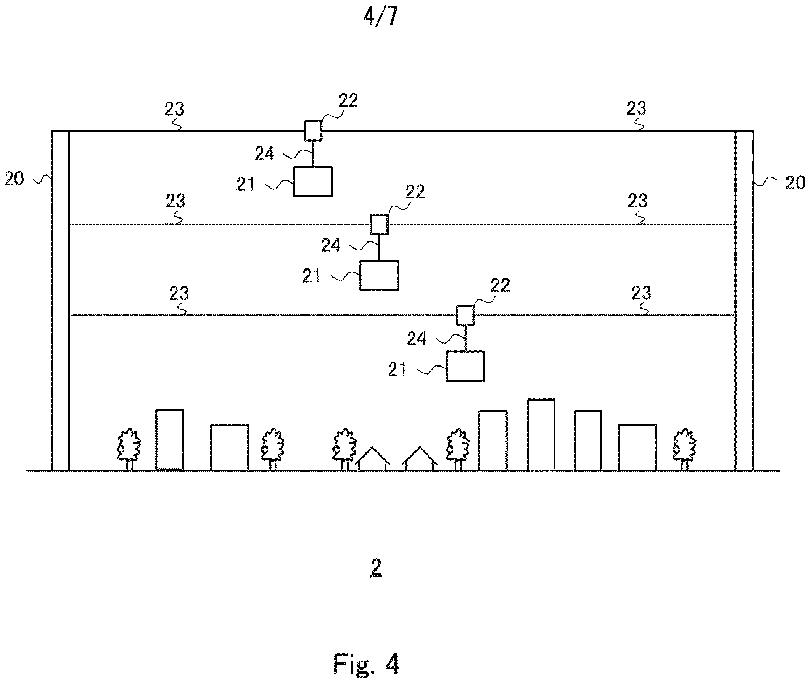

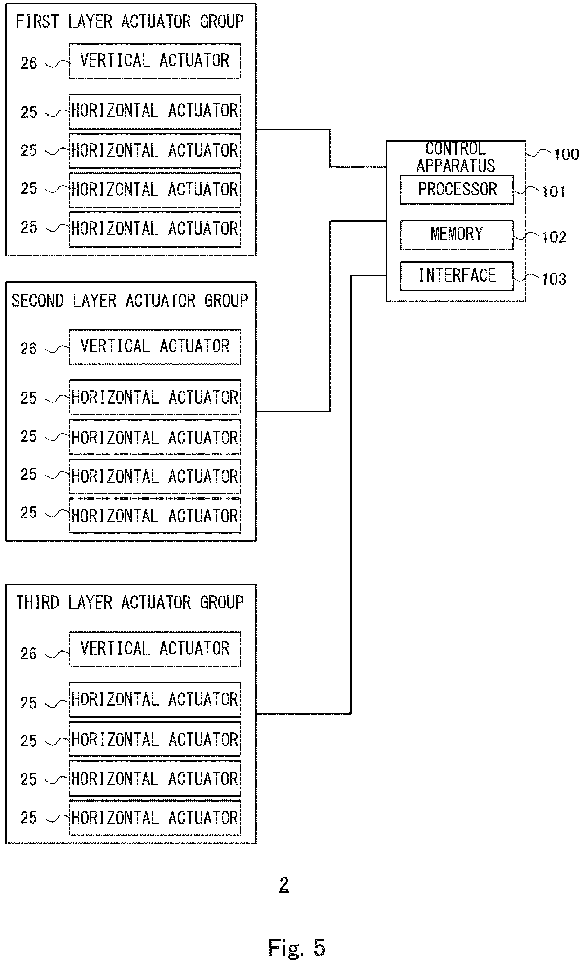

Fig. 4 is a schematic side view showing a schematic configuration of a transportation system 2 according to the second embodiment. Fig. 5 is a block diagram showing a schematic configuration of the transportation system 2 according to the second embodiment.

A configuration of each layer in the transportation system 2 is the same as that described in the first embodiment. In the following description, the description which is the same as the description of the first embodiment will be omitted as appropriate. Although Fig. 4 shows that the transportation system 2 carries out transportation over the city, the transportation system 2 can be applied to any other transportation environment. Also in this embodiment, for example, the number of the support columns is four, but in a manner similar to the first embodiment, the number of the support columns 20 may be any number of three or more.

As shown in Figs. 4 and 5, the transportation system 2 includes a plurality of sets of a container 21, a container support unit 22, a vertical actuator 26, and horizontal actuators 25. Specifically, in the example shown in Figs. 4 and 5, the transportation system 2 includes three of these sets, which constitute a three-layer transportation system. Although the three-layer transportation system is shown as an example here, the transportation system 2 may be a two-layer transportation system or a transportation system having four or more layers.

The horizontal wires 23 and the vertical wire 24 are also provided for each set, that is, provided in each layer. Here, the horizontal wires 23 in the different layers are supported by the support columns 20 at different heights. That is, in the transportation system 2, the horizontal wires 23 are stretched at different heights between the plurality of container support units 22 and the support columns 20, and the container support units 22 are arranged in a multi-layer manner. In each layer, the four horizontal wires 23 are supported at the same height by the support columns 20.

The control apparatus 100 according to this embodiment controls winding and unwinding of the vertical wires 24 by the vertical actuators 26 in the respective layers to thereby control the vertical movements of the containers 21 in the respective layers. Further, the control apparatus 100 controls the winding and unwinding of the horizontal wires 23 performed by the horizontal actuators 25 in the respective layers to thereby control the horizontal movements of the container support unit 22 and the containers 21 in the respective layers. Also in this embodiment, the control apparatus 100 controls each of the horizontal actuators 25 in the same layer to adjust the length of each of the horizontal wires 23 in the layer so that the height of the container support unit 22 in the layer maintains a predetermined height (a height of the support positions of the horizontal wires 23 supported by the support column 20).

In this embodiment, since the multi-layer transportation system is constructed, there is a risk that the structure of the transportation system in the upper-layer may collide with the structure in the lower layer of the transportation system during transportation. For example, when the container support unit 22 and the container 21 in the upper layer of the transportation system are moved in the horizontal direction, the vertical wire 24 or the container 21 in this layer may collide with the horizontal wires 23 or the container 21 (the container support unit 22) in the lower layer.

Therefore, in this embodiment, the length of the vertical wire 24 connected to the container 21 moving in the horizontal direction is made shorter than or equal to a predetermined length, thereby preventing the occurrence of such a collision. That is, when the container 21 (the container support unit 22) is moved in the horizontal direction, the control apparatus 100 according to this embodiment controls the vertical actuator 26 for winding the vertical wire 24 for the container 21 to be moved so that the container 21 to be moved is positioned above the horizontal wires 23 connected to the container support unit 22 in the layer one below the layer to which the container 21 (the container support unit 22) to be moved belongs. By performing such control, the container 21 moving in the horizontal direction is moved at a position higher than the structure in the lower layer. It is thus possible to prevent the occurrence of a collision at the time of moving in the horizontal direction. When the container 21 to be moved is the container 21 in the lowermost layer, the control apparatus 100 controls the vertical actuator 26 for winding the vertical wire 24 for the container 21 to be moved so that the height of the container 21 to be moved becomes a predetermined height.

The following collisions can also occur. When the container 21 of the transportation system in the upper layer is lowered, the container 21 may collide with the horizontal wires 23 or the container support unit 22 (the container 21) in the lower layer. Therefore, in this embodiment, the occurrence of such a collision is prevented by adjusting the position of the container support unit 22 in the lower layer of the transportation system.

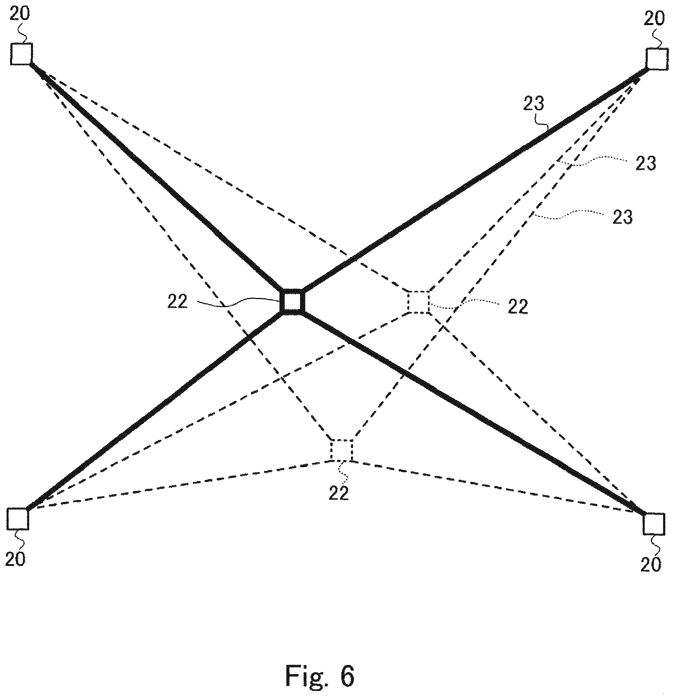

Here, the avoidance of a collision will be described with reference to Fig. 6. Fig. 6 is a plan view of the transportation system 2. In Fig. 6, the structures in the layer to which the container 21 to be lowered belongs are indicated by thick solid lines, and the structures of the lower layers are indicated by broken lines. When the control apparatus 100 controls the container 21 in the upper layer to be lowered, it controls the horizontal position of the container support unit 22 in the lower layer so that the container support unit 22 (the container 21) and the horizontal wires 23 in the lower layer do not hinder a line of flow of the container 21 in the upper layer. That is, when the control apparatus 100 controls the container 21 to be lowered, it controls the horizontal position of the lower layer container support unit, which is the container support unit 22 in the layer lower than the layer to which the container 21 to be lowered belongs, so that the positions of the lower layer container support unit and the horizontal wires 23 connected to this lower layer container support unit are not positioned on the line of flow of the container 21 to be lowered in the vertical line. This control is continued until the container 21 to be moved in the vertical direction rises thereafter. That is, this control is continued until the container 21 returns to a position above the horizontal wires 23 connected to the container support unit 22 in the layer one layer below the layer to which the container 21 belongs. By performing such control, the structure in the lower layer is disposed at a position that does not hinder the vertical movement of the container 21 in the upper layer. It is thus possible to prevent the occurrence of a collision at the time of the vertical movement.

Since the evacuation of the structure in the lower layer in order to lower the container 21 in the upper layer may cause the interruption of transportation in the lower layer of the transportation system, it is preferable to carry out transportation in which the occurrence of such evacuation is reduced. In order to do so, for example, the control apparatus 100 may control the horizontal movements of the container support units 22 in the respective layers so that areas in which the container support units 22 are moved in the respective layers are different from each other. That is, in the case of an N-layer (N is an integer greater than or equal to 2) transportation system, the entire transportation area may be divided into N subareas, and the transportation systems in the respective layers may be controlled so as to perform transportation in the subareas different from each other. Note that the correspondence relationship between the subareas and the layers and the division of the area may be dynamically set. By doing so, although it is completely unavoidable that the horizontal wires 23 in the lower layer cross the subareas allocated to the transportation system in the upper layer, it is possible to prevent or minimize the container support units 22 in the respective layers and the horizontal wires 23 connected to these container support units 22 from being congested. It is thus possible to reduce the possibility that the arrangement of the structure in the lower layer of the transportation system hinders the lowering of the container 21 in the upper layer.

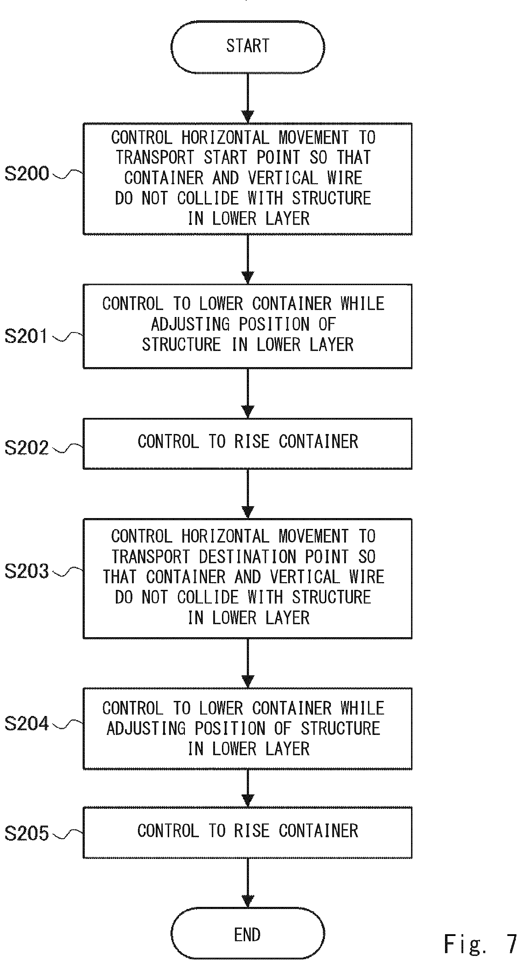

Fig. 7 is a flowchart showing an example of a flow of a transport operation of the transportation system 2. Hereinafter, the flow of the transport operation of the transportation system in the upper layer will be described with reference to Fig. 7.

In Step S200, the control apparatus 100 controls the horizontal movements of the container support unit 22 and the container 21. Specifically, the control apparatus 100 controls each horizontal actuator 25 so that the container support unit 22 and the container 21 are moved right above the designated transport start point. At this time, the control apparatus 100 performs control so that the container 21 and the vertical wire 24 do not collide with the structure in the lower layer. That is, as described above, the control apparatus 100 controls the length of the vertical wire 24 connected to the container 21 moving in the horizontal direction to be shorter than or equal to a predetermined length. It is preferable that such control be performed in order to prevent a collision, but it is not necessarily performed.

Next, in Step S201, the control apparatus 100 controls the vertical actuator 26 so that the container 21 is lowered to the transport start point. At this time, as described above, the control apparatus 100 adjusts the position of the structure in the lower layer of the transportation system so that the container 21 does not collide with the structure of the lower layer. It is preferable that such adjustment of the position be performed in order to prevent a collision, but it is not necessarily performed. After that, the transportation object is stored in the container 21.

Next, in Step S202, the control apparatus 100 controls the vertical actuator 26 so that the height of the container 21 rises above the lower layer.

Next, in Step S203, the control apparatus 100 controls each horizontal actuator 25 so that the container support unit 22 and the container 21 are moved right above the designated transport destination point. At this time, in a manner similar to Step S200, the control apparatus 100 performs control so that the container 21 and the vertical wire 24 do not collide with the structure in the lower layer.

Next, in Step S204, the control apparatus 100 controls the vertical actuator 26 so that the container 21 is lowered to the transport destination point. By doing so, the transportation object reaches the transport destination point. In Step S204, in a manner similar to Step S201, the control apparatus 100 adjusts the position of the structure in the lower layer of the transportation system so that the container 21 does not collide with the structure in the lower layer.

Lastly, in Step S205, the control apparatus 100 controls the vertical actuator 26 so that the height of the container 21 rises above the lower layer.

The second embodiment has been described above. According to this embodiment, a multi-layer transportation system is constituted. Thus, the transport capacity can be improved as compared with the single-layer transportation system according to the first embodiment.

Note that the present disclosure is not limited to the above-described embodiments, and may be modified as appropriate without departing from the spirit of the disclosure. For example, in the transportation system 1 or the transportation system 2, a repository for transportation objects may be provided in the central part of the area surrounded by the support columns 20 (i.e., the planar area 90 of Fig. 1), and the control apparatus 100 may control the transportation object in the repository to be transported to the transport destination point within the area. By doing so, it is possible to reduce variations in a transportation distance between each point in the area and the repository, i.e., variations in the transportation time.

Further, in the transportation system 1 or the transportation system 2, a repository may be provided in any part around the area surrounded by the support columns 20 (i.e., the planar area 90 of Fig. 1), and the control apparatus 100 may control the transportation object in the repository to be transported to the transport destination point within the area. By doing so, transportation objects can be collected at the repository without entering the planar area 90. For example, it is possible to prevent a truck carrying the transportation objects to the repository from entring a town.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A transportation system (1, 2) for transporting a transportation object in a three-dimensional space, the transportation system (1, 2) comprising:
a holding unit (21) configured to be suspended by a vertical wire (24) and hold the transportation object, the vertical wire (24) being a wire stretched in a vertical direction;
a support unit (22) configured to support the holding unit (21) with the vertical wire (24) interposed therebetween;
at least three support columns (20);
a vertical actuator (26) configured to wind and unwind the vertical wire (24);
a horizontal actuator (25) configured to wind and unwind a horizontal wire (23) stretched between the support column (20) and the support unit (22), the horizontal wire (23) being a wire stretched in a horizontal direction; and
a control apparatus (100) configured to control the vertical actuator (26) to thereby control a vertical movement of the holding unit (21), and control the horizontal actuator (25) to thereby control a horizontal movement of the support unit (22) and the holding unit (21).

2. The transportation system (2) according to Claim 1, wherein
a plurality of sets of the holding unit (21), the support unit (22), the vertical actuator (26), and the horizontal actuator (25) are included, and
the horizontal wires (23) of different heights are stretched between the plurality of the support units (22) and the support columns (20), and the support units (22) are arranged in a multi-layer manner.

3. The transportation system (2) according to Claim 2, wherein
the control apparatus (100) is configured to control, when the control apparatus (100) controls the holding unit (21) to be moved in the horizontal direction, the vertical actuator (26) for winding the vertical wire (24) for the holding unit (21) to be moved so that the holding unit (21) to be moved is positioned above the horizontal wire (23) connected to the support unit (22) in a layer one below a layer to which the holding unit (21) to be moved belongs.

4. The transportation system (2) according to Claim 3, wherein
the control apparatus (100) is configured to control, when the control apparatus (100) controls the holding unit (21) to be lowered, a horizontal position of the support unit (22) in a layer lower than the layer to which the holding unit (21) to be lowered belongs, the support unit (22) being hereinafter referred to as a lower support unit (22), so that the position of the lower support unit (22) and the position of the horizontal wire (23) connected to the lower support unit (22) are not positioned on a line of flow of the holding unit (21) to be lowered in the vertical direction.

5. The transportation system (2) according to any one of Claims 2 to 4, wherein
the control apparatus (100) is configured to control the horizontal movements of the support units (22) in the respective layers so that movement areas of the support units (22) in the respective layers in the horizontal direction are different from each other.

6. The transportation system (1, 2) according to any one of Claims 1 to 5, wherein
a repository of the transportation object is provided in a central part of an area surrounded by the support columns (20), and
the control apparatus (100) is configured to perform control to transport the transportation object of the repository.

7. The transportation system (1, 2) according to any one of Claims 1 to 5, wherein
a repository of the transportation object is provided in any part around an area surrounded by the support columns (20), and
the control apparatus (100) is configured to perform control to transport the transportation object of the repository.

8. A method for controlling a transportation system (1, 2) for transporting a transportation object in a three-dimensional space, the transportation system (1, 2) comprising:
a holding unit (21) configured to be suspended by a vertical wire (24) and hold the transportation object, the vertical wire (24) being a wire stretched in a vertical direction;
a support unit (22) configured to support the holding unit (21) with the vertical wire (24) interposed therebetween;
at least three support columns (20);
a vertical actuator (26) configured to wind and unwind the vertical wire (24); and
a horizontal actuator (25) configured to wind and unwind a horizontal wire (23) stretched between the support column (20) and the support unit (22), the horizontal wire (23) being a wire stretched in a horizontal direction, the method comprising
controlling the vertical actuator (26) to thereby control a vertical movement of the holding unit (21); and
controlling the horizontal actuator (25) to thereby control a horizontal movement of the support unit (22) and the holding unit (21).

9. A program for causing a computer of a transportation system (1, 2) for transporting a transportation object in a three-dimensional space comprising:
a holding unit (21) configured to be suspended by a vertical wire (24) and hold the transportation object, the vertical wire (24) being a wire stretched in a vertical direction;
a support unit (22) configured to support the holding unit (21) with the vertical wire (24) interposed therebetween;
at least three support columns (20);
a vertical actuator (26) configured to wind and unwind the vertical wire (24); and
a horizontal actuator (25) configured to wind and unwind a horizontal wire (23) stretched between the support column (20) and the support unit (22), the horizontal wire (23) being a wire stretched in a horizontal direction, to execute:
controlling the vertical actuator (26) to thereby control a vertical movement of the holding unit (21); and
controlling the horizontal actuator (25) to thereby control a horizontal movement of the support unit (22) and the holding unit (21).
